Europäisches Patentamt

European Patent Office

Office européen des brevets

(11) Veröffentlichungsnummer: **0 234 287**
**B1**

(12)          EUROPÄISCHE PATENTSCHRIFT

(45) Veröffentlichungstag der Patentschrift:
**11.01.89**

(51) Int. Cl.⁴: **F41D 7/04,** F41C 21/22,
F41C 21/08

(21) Anmeldenummer: **87100900.7**

(22) Anmeldetag: **23.01.87**

(54) Haltevorrichtung für Waffenrohre an einer Mehrrohrkanone.

(30) Priorität: **27.02.86  CH 796/86**

(43) Veröffentlichungstag der Anmeldung:
**02.09.87 Patentblatt 87/36**

(45) Bekanntmachung des Hinweises auf die Patenterteilung:
**11.01.89 Patentblatt 89/2**

(84) Benannte Vertragsstaaten:
**CH DE FR GB IT LI**

(56) Entgegenhaltungen:
**US-A- 2 632 272**
**US-A- 3 342 105**
**US-A- 3 568 350**

(73) Patentinhaber: **Werkzeugmaschinenfabrik
Oerlikon-Bührle AG, Birchstrasse 155,
CH-8050 Zürich(CH)**

(72) Erfinder: **Bohler, Erwin, Masch. Ing. HTL.,
Zwinggartenstrasse 51, CH-8600 Dübendorf(CH)**
Erfinder: **Bruderer, Werner, Masch. Ing. HTL.,
Schwandenholzstrasse 244, CH-8052 Zürich(CH)**

ACTORUM AG

**Beschreibung**

Die Erfindung betrifft eine Haltevorrichtung für Waffenrohre einer Mehrrohrkanone, mit einem ringförmigen Rohrlager zur Aufnahme der Waffenrohre, mit einem Verriegelungsring, der auf dem Rohrlager drehbar gelagert ist und zumindest in einer Stellung auf dem Rohrlager verriegelbar ist, wobei in der einen Stellung des Verriegelungsringes die Waffenrohre im Rohrlager gegen eine axiale Verschiebung gesichert sind und in der anderen Stellung des Verriegelungsringes die Waffenrohre im Rohrlager auswechselbar sind, mit Nocken am Verriegelungsring, welche in einer Stellung des Verriegelungsringes in Haltenuten der Waffenrohre eingreifen.

Bei einer bekannten Haltevorrichtung dieser Art (siehe US-A 3 342 105, Fagerstrom) für Waffenrohre einer Gatlingkanone sind die vorderen Rohrenden der Waffenrohre in Bohrungen einer ersten scheibenförmigen Platte hineingesteckt. Diese erste scheibenförmige Platte liegt an Flanschen der Waffenrohre an und wird durch eine zweite scheibenförmige Platte gegen ein Herausfallen gesichert. Diese zweite scheibenförmige Platte ragt in Aussparungen oder Einschnitte in den Waffenrohren hinein und wird durch eine Ringfeder gegen unerwünschte Drehung gesichert. Nach Entfernung der Feder 11 kann die zweite scheibenförmige Platte soweit gedreht werden, dass die Nocken nicht mehr in die Einschnitte hineinragen und diese zweite scheibenförmige Platte kann nach ihrer Drehung entfernt werden, worauf sich dann auch die erste scheibenförmige Platte entfernen lässt.

Diese bekannte Haltevorrichtung weist somit wesentliche Merkmale der erfindungsgemässen Haltevorrichtung auf und die US-A 3 342 105 bildet die Grundlage für den Oberbegriff des Anspruches 1 der vorliegenden Anmeldung.

In der US-A 3 568 350 ist eine Feuerwaffe beschrieben, mit einem Verschluss, der drehbar in einem Gehäuse gelagert ist. Um den Verschluss gegen Drehung zu sichern, ist ein Bolzen im Verschluss entgegen der Kraft einer Feder verschiebbar gelagert und ragt mit seinem einen Ende in eine Bohrung des Gehäuses. Zum Drehen des Verschlusses im Gehäuse muss der Bolzen mit seinem einen Ende entgegen der Kraft der Feder aus der Bohrung des Gehäuses heraus geschoben werden. Der Riegel der vorliegenden Anmeldung ist jedoch nicht mit dem Bolzen dieser bekannten Drehsicherung vergleichbar.

Die Aufgabe, welche durch die erfindungsgemässe Ausbildung der Haltevorrichtung gelöst werden soll, besteht darin, das Öffnen und Schliessen der Haltevorrichtung zu erleichtern und eine zuverlässige Sicherung der Waffenrohre insbesondere auch gegen Drehung zu gewährleisten.

Die erfindungsgemässe Haltevorrichtung, mit der diese Aufgabe gelöst wird, ist dadurch gekennzeichnet,

– dass im Verriegelungsring radial verschiebbare, federbelastete Riegel angeordnet sind, welche in der ersten Stellung des Verriegelungsringes in eine erste Aussparung des Rohrlagers und in der zweiten Stellung des Verriegelungsringes in eine zweite Aussparung hineintragen,

– dass der Verriegelungsring durch einen Bajonettverschluss auf dem Rohrlager gehalten ist und

– dass das Rohrlager Halteklauen aufweist, welche polygonförmige Abschnitte des Waffenrohres umgreifen, um das Waffenrohr gegen eine unbeabsichtigte Drehung um seine Längsachse zu sichern.

Haltevorrichtung (10) für Waffenrohre (11) einer Mehrrohrkanone, mit einem ringförmigen Rohrlager (14) zur Aufnahme der Waffenrohre (11), mit einem Verriegelungsring (15), der auf dem Rohrlager (14) drehbar gelagert ist und zumindest in einer Stellung auf dem Rohrlager (14) verriegelbar ist, wobei in der einen Stellung des Verriegelungsringes (15) die Waffenrohre (11) mit Rohrlager (14) gegen eine axiale Verschiebung gesichert und in der anderen Stellung des Verriegelungsringes (15) die Waffenrohre (11) im Rohrlager auswechselbar sind, mit Nocken (23) am Verriegelungsring (15), welche in einer Stellung des Verriegelungsringes (15) in Haltenuten (13) der Waffenrohre (11) eingreifen, dadurch gekennzeichnet,

– dass im Verriegelungsring (15) radial verschiebbare, federbelastete Riegel (19) angeordnet sind, welche in der ersten Stellung des Verriegelungsringes (15) in eine erste Aussparung (21) des Rohrlagers (14) und in der zweiten Stellung des Verriegelungsringes (15) in eine zweite Aussparung (22) des Rohrlagers (14) hineinragen,

– dass der Verriegelungsring (15) durch einen Bajonettverschluss (16, 17) auf dem Rohrlager (14) gehalten ist und

– dass das Rohrlager (14) Halteklauen (24) aufweist, welche polygonförmige Abschnitte (12) des Waffenrohres (11) umgreifen, um das Waffenrohr (11) gegen eine unbeabsichtigte Drehung um seine Längsachse zu sichern.

Der Vorteil dieser Haltevorrichtung besteht im wesentlichen darin, dass mit der Verdrehung eines einzigen Verriegelungsringes sämtliche Waffenrohre verriegelt sind und dass nicht jedes einzelne Waffenrohr separat verriegelt werden muss.

Vorzugsweise weist der Verriegelungsring Nocken auf, welche in der einen Stellung des Verriegelungsringes in Haltenuten der Waffenrohre eingreifen. Im Verriegelungsring sind vorzugsweise radial verschiebbare, federbelastete Riegel angeordnet, welche in der ersten Stellung des Verriegelungsringes in eine erste Aussparung des Rohrlagers und in der zweiten Stellung des Verriegelungsringes in eine zweite Aussparung des Rohrlagers hineinragen. Der Verriegelungsring ist vorzugsweise durch einen Bajonettverschluss auf dem Rohrlager gehalten. Schliesslich weist das Rohrlager vorzugsweise Halteklauen auf, welche vierkantige Abschnitte des Waffenrohres umgreifen, um das Waffenrohr gegen eine unbeabsichtigte Drehung um seine Längsachse zu sichern.

Ein Ausführungsbeispiel der erfindungsgemässen Haltevorrichtung ist im folgenden anhand der beigefügten Zeichnung ausführlich beschrieben.

Es zeigt:

Fig. 1 eine Ansicht der gesamten Haltevorrichtung von vorne, wobei in der linken Hälfte die Vorrichtung in verriegelter Stellung und in der rechten Hälfte in entriegelter Stellung gezeigt ist;
Fig. 2 einen Schnitt nach Linie II–II in Fig. 1;
Fig. 3 ein anderes Ausführungsbeispiel der Haltevorrichtung von vorne, wobei in der linken Hälfte die Vorrichtung in verriegelter Stellung und in der rechten Hälfte in entriegelter Stellung gezeigt ist; und
Fig. 4 einen Schnitt nach Linie IV–IV in Fig. 3.

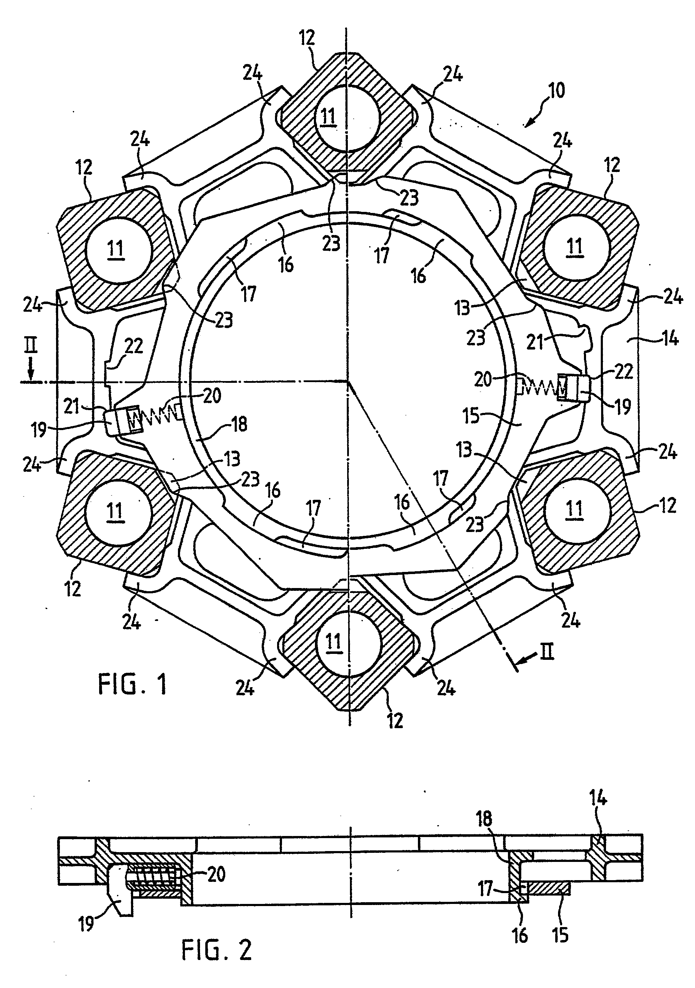

Die in Fig. 1 und 2 dargestellte Haltevorrichtung 10 dient zum Halten von sechs Waffenrohren 11, welche im Bereich der Haltevorrichtung 10 einen vierkantigen Abschnitt 12 aufweisen. An jedem dieser vierkantigen Abschnitte 12 ist eine Haltenut 13 vorhanden, in welche die Haltevorrichtung 10 eingreift, um eine axiale Verschiebung der Waffenrohre 11 zu verhindern, wie weiter unten noch ausführlicher beschrieben ist. Die Haltevorrichtung 10 besteht im wesentlichen aus einem Rohrlager 14 und einem Verriegelungsring 15, wie insbesondere aus Fig. 2 ersichtlich ist. Der Verriegelungsring 15 ist auf dem Rohrlager 14 drehbar gelagert und durch vier Nocken 16 des Rohrlagers 14 gehalten. Damit der Verriegelungsring 15 auf das Rohrlager 14 aufgesetzt werden kann, weist der Ring 15 vier Aussparungen 17 auf. Diese Aussparungen 17 des Ringes 15 sind etwas grösser als die vier Nocken 16 des Rohrlagers 14, so dass in einer bestimmten Stellung des Ringes 15 dieser auf einen Flansch 18 des Rohrlagers 14 aufgeschoben werden kann. Nach dem Aufschieben kann der Ring 15 auf dem Rohrlager 14 gedreht werden, wodurch er auf dem Rohrlager, nach Art eines Bajonettverschlusses, verriegelt ist und nicht mehr herunterfallen kann.

Auf dem Ring 15 sind zwei Riegel 19 radial verschiebbar angeordnet. Im Innern des Riegels 19 befindet sich eine Feder 20, welche sich einerseits am Flansch 18 und andererseits am Riegel 19 abstützt und das Bestreben hat, den Riegel 19 radial nach aussen zu schieben. Gemäss Fig. 1, linke Seite, kann dieser Riegel 19 entweder in eine erste Aussparung 21 oder, gemäss Fig. 1 rechte Seite, in eine zweite Aussparung 22 eingreifen und dadurch den Ring 15 gegen eine unbeabsichtigte Verdrehung gegenüber dem Rohrlager 14 sichern.

Der Ring 15 besitzt sechs Nocken 23, welche entweder, gemäss Fig. 1 linke Seite, in die erwähnten Nuten 13 des Waffenrohres 11 eingreifen oder, gemäss Fig. 1 rechte Seite, sich ausserhalb der Nuten 13 des Waffenrohres befinden.

Das Rohrlager 14 besitzt zwölf Halteklauen 24, welche den vierkantigen Abschnitt 12 des Waffenrohres 11 umgreifen und die Waffenrohre gegen eine unbeabsichtigte Verdrehung um ihre eigene Achse sichern. Die erwähnten Nocken 23, welche in die Nuten 13 des Waffenrohres 11 eingreifen, sichern das Waffenrohr 11 gegen eine unbeabsichtigte Verschiebung in axialer Richtung. Zum Verriegeln oder Entriegeln der Waffenrohre 11 in der Haltevorrichtung 10 genügt es, die beiden Riegel 19 entgegen der Kraft der Feder 20 radial nach innen zu verschieben und den Ring 15 entweder im Uhrzeigersinne gegenüber dem Rohrlager 14 zu drehen, bis die Riegel 19 in die Nut 22 einrasten, oder im Gegenuhrzeigersinne zu drehen, bis die Riegel 19 in die andere Nut 21 einrasten.

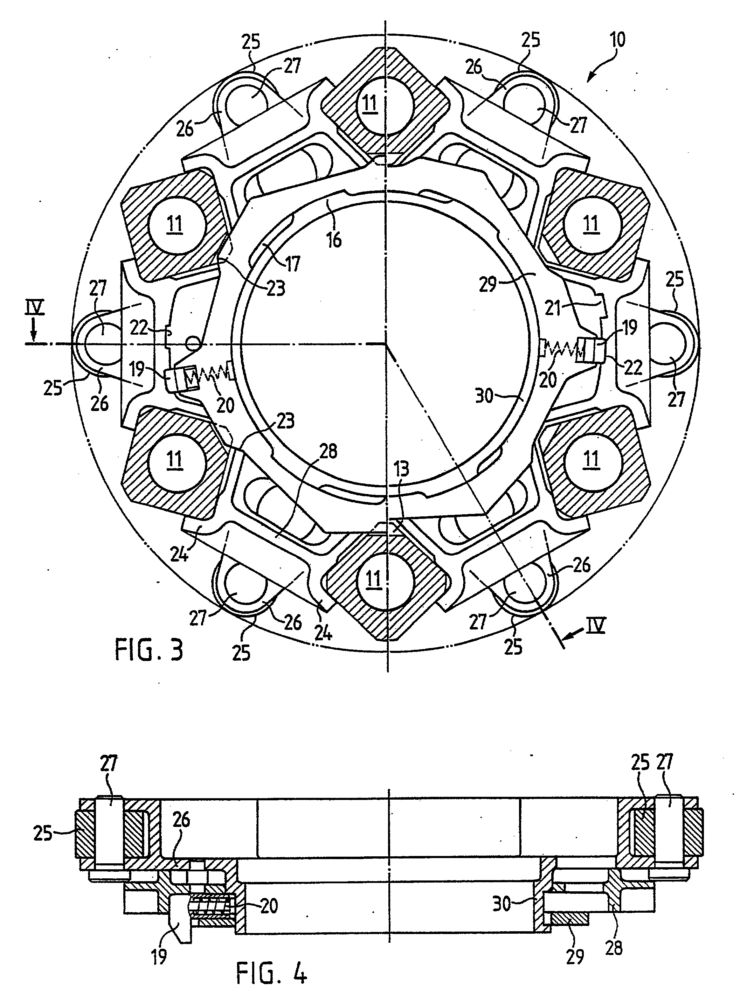

Das zweite Ausführungsbeispiel der Haltevorrichtung 10, gemäss Fig. 3 und 4, unterscheidet sich vom ersten Ausführungsbeispiel der Haltevorrichtung 10, gemäss Fig. 1 und 2, im wesentlichen dadurch, dass am Rohrlager 10 sechs Rollen 25 drehbar gelagert sind. Gemäss Fig. 3 und insbesondere Fig. 4 besteht diese zweite Haltevorrichtung aus einem Träger 26, auf dem die Rollen 25 auf Bolzen 27 drehbar gelagert sind. Auf diesen Trägern 26 befindet sich ein Rohrlager 28 und ein Verriegelungsring 29. Dieses Rohrlager 28 und dieser Ring 29 sind auf einem Flansch 30 des Trägers 26 drehbar gelagert. Alle übrigen Teile der Haltevorrichtung 10, gemäss dem in Fig. 3 und Fig. 4 dargestellten Ausführungsbeispiel entsprechen dem ersten Ausführungsbeispiel, gemäss Fig. 1 und 2. Diese Teile sind auch mit denselben Bezugsziffern versehen. Die Rollen 25 ermöglichen, dass sich das aus den sechs Waffenrohren 11 gebildete Rohrbündel in einem nicht dargestellten Gehäuse drehen kann.

## Patentansprüche

Haltevorrichtung (10) für Waffenrohre (11) einer Mehrrohrkanone, mit einem ringförmigen Rohrlager (14) zur Aufnahme der Waffenrohre (11), mit einem Verriegelungsring (15), der auf dem Rohrlager (14) drehbar gelagert ist und zumindest in einer Stellung auf dem Rohrlager (14) verriegelbar ist, wobei in der einen Stellung des Verriegelungsringes (15) die Waffenrohre (11) im Rohrlager (14) gegen eine axiale Verschiebung gesichert und in der anderen Stellung des Verriegelungsringes (15) die Waffenrohre (11) im Rohrlager auswechselbar sind, mit Nocken (23) am Verriegelungsring (15), welche in einer Stellung des Verriegelungsringes (15) in Haltenuten (13) der Waffenrohre (11) eingreifen, dadurch gekennzeichnet,
– dass im Verriegelungsring (15) radial verschiebbare, federbelastete Riegel (19) angeordnet sind, welche in der ersten Stellung des Verriegelungsringes (15) in eine erste Aussparung (21) des Rohrlagers (14) und in der zweiten Stellung des Verriegelungsringes (15) in eine zweite Aussparung (22) des Rohrlagers (14) hineinragen,
– dass der Verriegelungsring (15) durch einen Bajonettverschluss (16, 17) auf dem Rohrlager (14) gehalten ist und
– dass das Rohrlager (14) Halteklauen (24) aufweist, welche polygonförmige Abschnitte (12) des Waffenrohres (11) umgreifen, um das Waffenrohr (11) gegen eine unbeabsichtigte Drehung um seine Längsachse zu sichern.

## Revendications

Dispositif de verrouillage (10) pour les tubes (11) d'une arme à feu à tubes multiples comportant un support de tube (14) annulaire pour recevoir les tu- support de tube (14) annulaire pour recevoir les tubes (11), une bague de verrouillage (15) montée à rotation sur le support de tube (14) et susceptible d'être verrouillée dans au moins une position sur le support de tube (14), et dans une position de la bague de verrouillage (15), les tubes (11) sont bloqués sur le support (14) contre toute translation axiale et dans l'autre position de la bague de verrouillage (15), les tubes (11) peuvent être interchangés dans le support, la bague de verrouillage (15) étant munie de bossages (23) qui dans une position de la bague de verrouillage (15) viennent pénétrer dans des rainures de verrouillage (13) des tubes (11), dispositif caractérisé en ce que:

– des verrous (19) chargés par des ressorts coulissent radialement dans la bague de verrouillage (15), verrous qui, dans une première position de la bague de verrouillage (15) viennent dans une première découpe (21) du support de tube (14) et qui dans la seconde position de la bague de verrouillage (15) viennent dans une seconde découpe (22) du support (14),

– la bague de verrouillage (15) est maintenue sur le support de tube (14) par une liaison de type baïonnette (16, 17) et,

– le support de tube (14) comporte des griffes de verrouillage (24) qui entourent des segments polygonaux (12) du tube (11) pour bloquer le tube (11) de l'arme contre toute rotation accidentelle autour de son axe longitudinal.

## Claims

A device (10) for locking the barrels (11) of a multi-barrel gun, with a ring-shaped barrel mount (14) for receiving the barrels (11), with a locking ring (15) which is rotatably mounted on the barrel mount (14) and at least in one position can be locked on the barrel mount (14), the barrels (11) being locked in the barrel mount (14) against axial displacement when the locking ring (15) is in one position and the barrels (11) being interchangeable in the barrel mount (14) when the locking ring (15) is in the other position, and with cams (23) on the locking ring (15) which engage in retaining grooves (13) of the barrels (11) when the locking ring (15) is in one position, characterised in that

– radially displaceable, spring-loaded bars (19) are arranged in the locking ring (15), which when the locking ring (15) is in the first position project into a first recess (21) of the barrel mount (14) and when the locking ring (15) is in the second position project into a second recess (22) of the barrel mount (14),

– the locking ring (15) is held on the barrel mount (14) by a bayonet closure (16, 17),

– the barrel mount (14) has gripping dogs (24) which clasp polygonal sections (12) of the barrel (11) in order to lock the barrel (11) against accidental rotation about its longitudinal axis.

FIG. 1

FIG. 2

FIG. 3

FIG. 4